# EUROPEAN PATENT SPECIFICATION

(11) **EP 2 339 192 B1**
(45) Date of publication and mention of the grant of the patent: **26.06.2013**
(21) Application number: 10196242.1
(22) Date of filing: 21.12.2010
(51) Int. Cl.: F16C 17/03

(54) **Tilting-pad journal bearing device**
Kippsegment-Radiallagervorrichtung
Dispositif de palier radial à patins oscillants

(30) Priority: 28.12.2009 JP 2009296652
(43) Date of publication of application: 29.06.2011
(73) Proprietor: Hitachi, Ltd., Tokyo 100-8280 (JP)
(72) Inventor: Suzuki, Kenta, Tokyo 100-8220 (JP); Inoue, Tomoaki, Tokyo 100-8220 (JP); Hemmi, Makoto, Tokyo 100-8220 (JP); Murata, Kenichi, Tokyo 100-8220 (JP)
(74) Representative: MERH-IP Matias Erny Reichl Hoffmann

(56) References cited:
- JP-A- 9 032 848
- JP-A- 58 088 226
- JP-A- 2003 120 675
- US-A1- 2002 141 670

## Description

### BACKGROUND OF THE INVENTION

### 1. Field of the Invention

The present invention relates generally to journal bearing devices that support high-speed rotary bodies such as turbines, and more particularly to a tilting-pad journal bearing device.

### 2. Description of the Related Art

The rotary machines rotated at high speed use such tilting-pad journal bearings as shown in "Handbook of Tripology", pp. 53-57, 2001, compiled by the Japanese Society of Tripologists and published by Yokendo.

Self-excited vibration such as oil whip tends to occur particularly with, for example, large rotary bodies such as a thermal power plant that are large in bearing clearance and relatively low in the character frequencies of their rotating shafts. A decrease in bearing load reduces the amount of eccentricity of the rotating shaft, thus deteriorating the stability of the rotating shaft - bearing system, and resulting in oil whip. Tilting-pad bearings are used in a bearing device capable of suppressing such self-excited vibration.

However, examples in which an event similar to oil whip occurs even with tilting-pad bearings have been reported, as discussed in Hiroo TAURA and Masato TANAKA, "Effects of the Angular Spring Action and Angular Damping of an Oil Film on the Stability Characteristics of Tilting-Pad Journal Bearings", Transactions of the Japan Society of Mechanical Engineers, Series C, Vol. 72, No. 722, pp. 3227-3235. In addition, vibration may originate from other sections.

It is known that as in JP-1995-151139-A, a conventional tilting-pad bearing uses an elastomer in its pads to absorb the energy of the above vibration, or that as in JP-2000-205251-A, another conventional tilting-pad bearing suppress the vibration by having a piezoelectric element on a sliding surface of the bearing and changing a clearance between its pads and a rotating shaft.

Furthermore, faster rotation of the rotating shaft correspondingly increases the temperature of the bearing pads. In general, the sliding surface of a bearing uses an alloy of a low melting point, such as white metal. In case of significant vibration, such an alloy is effective for preventing thermal damage to a rotating shaft, since the vibration dissolves the sliding surface of the bearing. As the sliding surface of the bearing increases in temperature with an increase in shaft speed, the bearing will decrease in strength and hence in reliability.

Some conventional types of tilting-pad bearings have a lubricating-oil supply channel in their pads, as in JP-2003-113834-A, to cool the bearing pads.

Document JP 9032848 A discloses a bearing pad which comprises a multiple thin-shaped area on its outer circumferential surface in order to increase the surface area of the bearing pad in order to be able to better prevent the occurrence of burning.

Document JP 2003 120675 A discloses a tilting-pad journal bearing comprising all the features of the preamble of claim 1.

### SUMMARY OF THE INVENTION

The adoption of an elastomer, however, is considered to lead to deterioration and/or transmutation, whereas the use of a piezoelectric element requires the auxiliary machines that control it.

In addition, for cooling, a confined channel is prone to create a laminar flow of a lubricating oil through the inside of the channel, resulting in an insignificant cooling effect. Furthermore, obtaining an appropriate flow of the lubricating oil into the channel requires pipelining or tubing, which tends to increase the number of parts required.

An object of the present invention is therefore to provide a highly reliable tilting-pad journal bearing device constructed to suppress vibration by improving a damping effect through a lubricating oil film, and thus to improve cooling performance for bearing pads without increasing the number of parts required.

In order to solve the above problems, the present invention provides a tilting-pad journal bearing device according to claim 1.

The above construction of the tilting-pad journal bearing device in the present invention makes the bearing device highly reliable since the device suppresses vibration by improving a damping effect through a lubricating oil film and since the device improves bearing pad cooling performance without increasing the number of parts required.

### BRIEF DESCRIPTION OF THE DRAWINGS

Fig. 1 is a schematic sectional view of a tilting-pad journal bearing according to an embodiment of the present invention;
Fig. 2 is a sectional view of a bearing pad which forms part of the tilting-pad journal bearing according to the embodiment of the present invention;
Fig. 3 is a schematic perspective view of the bearing pad shown in Fig. 2;
Fig. 4 is a sectional view showing a deformed state of the bearing pad shown in Fig. 2;
Fig. 5 is a diagram showing an example of layout positions of the bearing pad used in the present invention;
Fig. 6 is a diagram showing another example of layout positions of the bearing pad used in the present invention;
Fig. 7 is a diagram showing an example of applying the bearing of the present invention in plurality to a multi-spanned steam turbine system for a thermal power plant; and
Fig. 8 is a diagram showing an example of applying the bearing of the present invention in plurality to a gas turbine system.

### DESCRIPTION OF THE PREFERRED EMBODIMENTS

Hereunder, an embodiment of the present invention will be described in detail referring to the accompanying drawings as appropriate. Throughout the drawings, the same reference number is assigned to each of constituent elements.

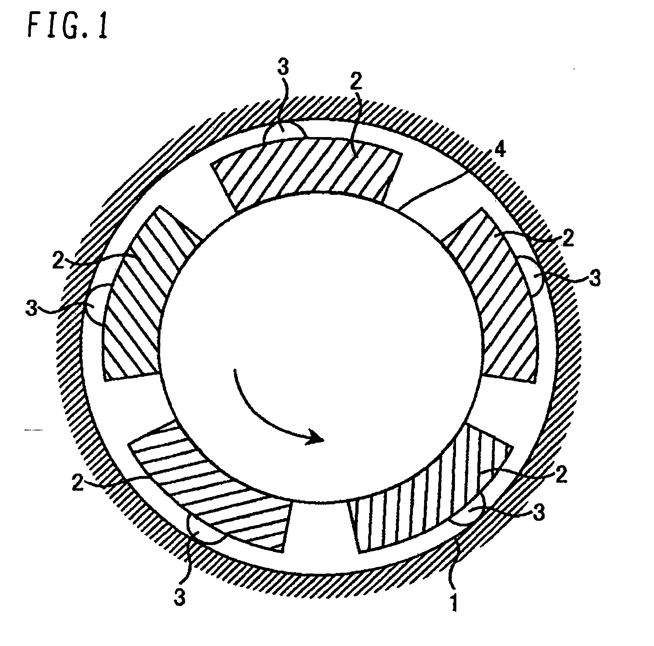

Fig. 1 is a schematic sectional view of a tilting-pad journal bearing according to the embodiment of the present invention. As shown in Fig. 1, a plurality of bearing pads 2 are provided in a circumferential direction at an inner circumferential side of a casing 1. The bearing pads 2 are each supported by the casing via a pivot 3 mounted at an outer circumferential side of the pad. A rotary body 4 is provided at an inner circumferential side of the bearing pad 2. The rotary body 4 rotates in a direction of an arrow while being supported by the bearing pad 2.

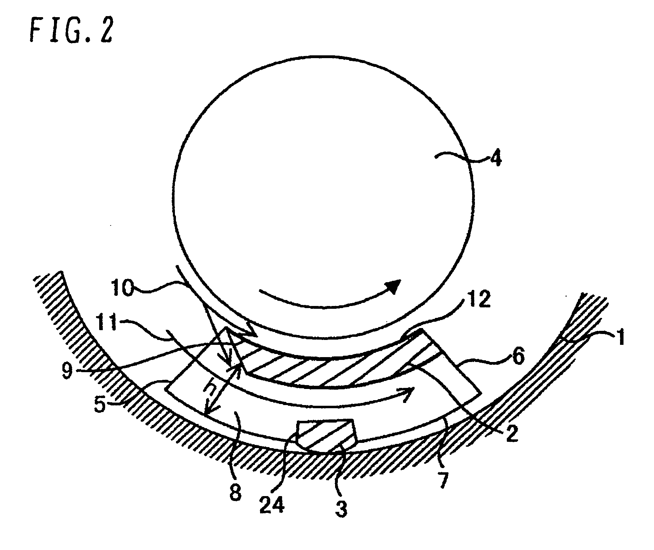

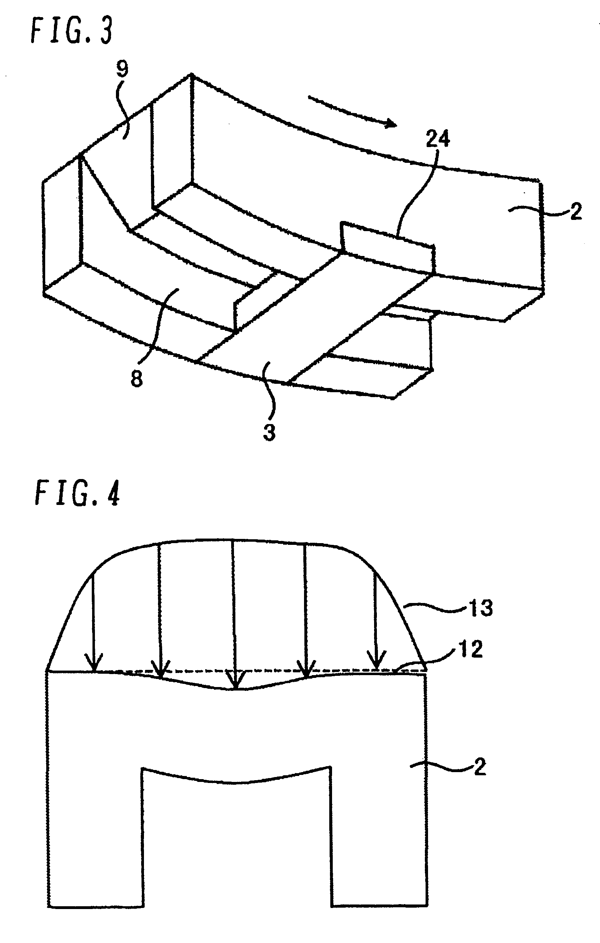

Fig. 2 is a schematic sectional view of the bearing pad which forms part of the tilting-pad journal bearing according to the embodiment of the present invention. Fig. 3 is a schematic perspective view of the bearing pad shown in Fig. 2. Hereinafter, of circumferential opposite end faces of the bearing pad 2, an end face located at an upstream side in the rotational direction of the rotary body 4 is referred to as the upstream end face 5, and an end face located at a downstream side in the rotational direction is referred to as the downstream end face 6. In the present embodiment, the bearing pad 2 includes an oil-through groove 8. The oil-through groove 8 extends circumferentially along an outer circumferential surface 7 of the bearing pad 2 and extends through from the upstream end face 5 to the downstream end face 6.

The oil-through groove 8 includes a slope 9 formed so that radial height "h" of the groove gradually increases from the downstream side in the rotational direction, towards the upstream end face 5, and so that the groove height "h" becomes substantially equal to radial height of the bearing pad 2, at its end face.

The pivot 3 comes into contact with the casing 1 and needs to be strong enough to bear an axial load at a location of the casing. The pivot 3, therefore, is desirably manufactured and placed as an independent part, partly for ease in machining and bearing clearance adjustment.

For the placement of the pivot 3 as an independent part in the bearing pad 2, a fitting groove 24 is provided axially on the outer circumferential surface 7 of the bearing pad 2 and the pivot 3 is fitted into the fitting groove 24. As shown in Fig. 3, the fitting groove 24 is formed with height smaller than that of the oil-through groove 8 so as to prevent the pivot 3 from blocking the oil-through groove 8 when the pivot 3 is mounted in the fitting groove 24. The pivot 3 is therefore mounted in the fitting groove 24 in such a state as to form a bridge partly over the oil-through groove 8. This structure provides an advantage of easy assembly.

In the tilting-pad bearing, the rotation of the rotary body 4 in the rotational direction forms a flow of a lubricating oil. In the tilting-pad bearing of the present embodiment, since the bearing pad 2 internally has the oil-through groove 8 and since the upstream end face has the slope 9, the flow 10 of the lubricating oil is divided into a flow streaming along a sliding surface 12 of the bearing pad 2, and a flow streaming into the oil-through groove 8. Additionally, if the plurality of bearing pads 2 in the present embodiment are provided consecutively in a circumferential direction, a flow 11 passing through the oil-through groove 8 of the bearing pad 2 located at the upstream side of the rotational direction will also flow into the oil-through groove 8 of the bearing pad 2 located at the downstream side.

According to the structure of the bearing pad 2 in the present embodiment, a flow channel with a relatively large channel cross-sectional area can be easily formed just by grooving the outer circumferential surface of the bearing pad 2. The channel is formed so as to have a larger channel cross-sectional area, which creates a greater flow of the lubricating oil into the bearing pad 2. In addition, since increasing the channel cross-sectional area dimensionally increases the channel, a turbulent flow of the lubricating oil through the bearing pad 2 becomes prone to occur, thus improving pad cooling performance, and consequently suppressing thermal damage to the bearing. The present embodiment, therefore, improves cooling performance for the bearing pad without an increase in the number of parts.

Fig. 4 is a sectional view showing a deformed state of the bearing pad 2 shown in Fig. 2. If vibration occurs in the rotary body 4, such an excessive oil-film pressure distribution 13 as shown in Fig. 4 occurs upon the bearing pad 2. This pressure action deflects the sliding surface 12 downward in an axially central section of the sliding surface 12, as shown in Fig. 4, and deforms the surface 12. The deformation forms a clearance upon the sliding surface 12. The undeformed sliding surface 12 is denoted by a dashed line. Once the lubricating oil flowing along the sliding surface 12 has flown into the clearance, an even larger amount of lubricating oil is retained on the sliding surface 12 and a greater damping effect based upon the oil film can be obtained. Vibration suppression performance improves as a result.

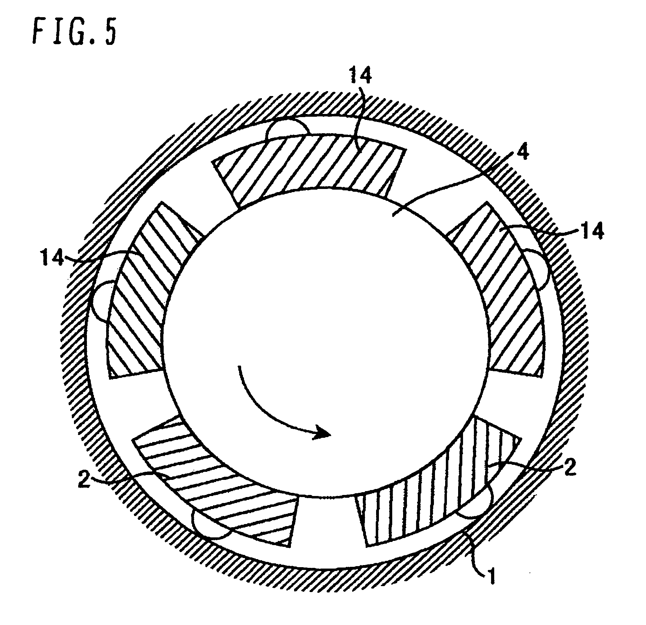

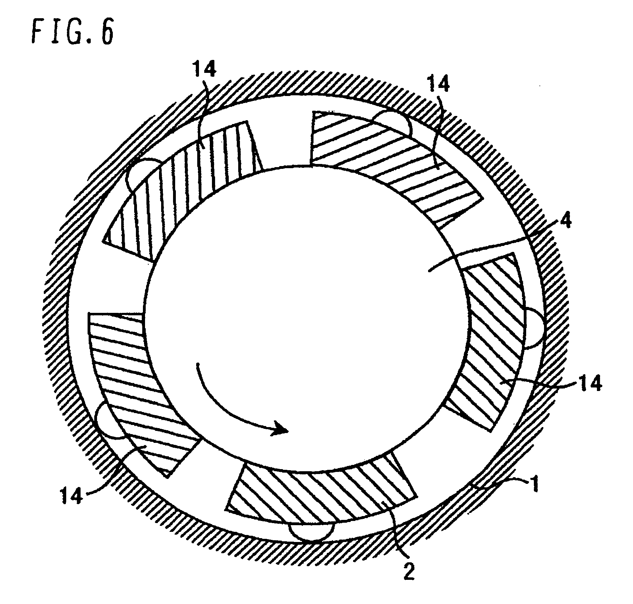

Figs. 5 and 6 are diagrams that show examples of layout positions of the bearing pad 2 used in the present invention. For greater damping, it is desirable that all bearing pads be the bearing pads 2 according to the present invention. If faster rotation causes problematic increases in temperature of the bearing pads, the bearing pads 2 according to the present embodiment may be arranged only on a load surface of the bearing, at a lower-half side thereof that is prone to undergo an axial load and thus increase in temperature. Bearing pads in addition thereto can be conventional bearing pads 14 not including the oil-through groove 8.

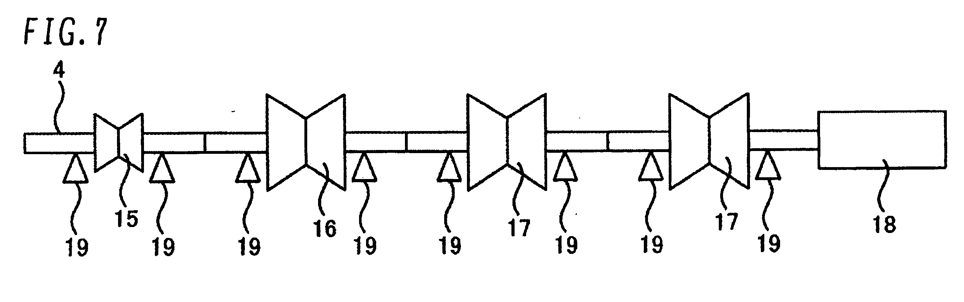

Fig. 7 is a diagram showing an example in which a bearing device with the tilting-pad journal bearing used in plurality in the present invention is applied to a multi-spanned steam turbine system for a thermal power plant.

As shown in Fig. 7, thermal power plants are generally of a multi-spanned shape with a high-pressure turbine 15, a medium-pressure turbine 16, a low-pressure turbine 17, and a power generator 18, which are interconnected to obtain high efficiency. The bearings in the present embodiment are desirably adopted as all bearings 19. However, since the low-pressure turbine 17 imparts a significant load, journal bearings higher in withstand load may be used as bearings that support the turbine 17, and the bearings in the present embodiment may be used as bearings that support the high-pressure turbine 15 or medium-pressure turbine 16 that is relatively light in load.

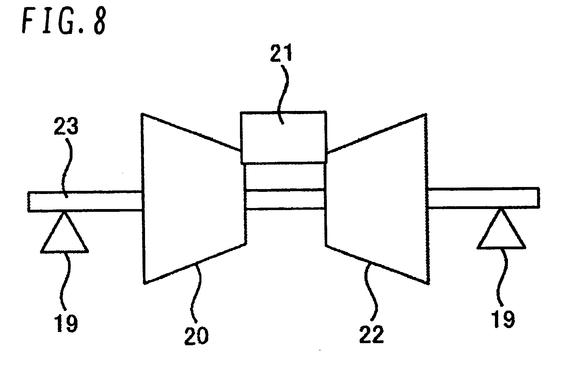

Fig. 8 is a diagram showing an example of applying the bearing of the present invention in plurality to a gas turbine system. The gas turbine system includes: a compressor 20 that compresses air; a combustor 21 that mixes fuel with the air compressed by the compressor 20, burns the mixture, and generates combustion gases; a turbine 22 driven by the combustion gases to rotate; a turbine rotor 23 that mechanically interconnects the turbine 22 and the compressor 20; and bearings 19 that support the turbine rotor 23. Since gas turbines commonly rotate at higher speeds than steam turbines and are small in axial load, applying the bearing of the present invention is useful for suppressing vibration and increases in temperature of bearing pads.

## Claims

1. A tilting-pad journal bearing device that supports a rotary body (4), the device comprising:
a casing (1); and
a plurality of bearing pads (2) provided at an inner circumferential side of the casing (1);
wherein at least one of the bearing pads (2), which is provided at a lower-half side of a bearing, includes a groove (8) provided at an axially central section of an outer circumferential surface (7) of the bearing pad (2), the groove (8) circumferentially extending through from an end face of the pad to its opposite end face,
**characterised in that** an axially central section of a sliding surface (12) of the bearing pad (2) is able to deflect downward.

2. The tilting-pad journal bearing device according to claim 1,
wherein the groove (8) includes a slope (9) that gradually increases groove height as the groove goes towards an upstream end face (5) in a rotational direction of the rotary body (4).

3. The tilting-pad journal bearing device according to at least one of claims 1 to 2,
wherein the bearing pad (2) having the groove (8) includes a fitting groove (24) provided in an axial direction on the outer circumferential surface (7) of the bearing pad (2), and a pivot that supports the bearing pad; and
the pivot (3) is fitted in the fitting groove (24) in such a removable state as to form a bridge partly over the groove.

## Patentansprüche

1. Kippsegment-Radiallagervorrichtung, die einen rotierenden Körper (4) trägt, mit:
einem Gehäuse (1); und
mehreren Lagersegmenten (2), die auf einer Innenumfangsseite des Gehäuses (1) bereitgestellt sind;
wobei zumindest eines der Lagersegmente (2), das auf einer Seite der unteren Hälfte eines Lagers bereitgestellt ist, eine Nut (8) einschließt, die an einem axial mittigen Abschnitt einer Außenumfangsfläche (7) des Lagersegments (2) vorgesehen ist, wobei sich die Nut (8) in Umfangsrichtung von einer Endfläche des Segments zu seiner gegenüberliegenden Endfläche erstreckt,
**dadurch gekennzeichnet, dass** ein axial mittiger Abschnitt einer Gleitfläche (12) des Lagersegments (2) imstande ist, nach unten abzulenken.

2. Kippsegment-Radiallagervorrichtung nach Anspruch 1,
wobei die Nut (8) eine Schräge (9) einschließt, die die Nuthöhe allmählich erhöht, wenn die Nut zu einer stromaufwärtigen Endfläche (5) in einer Rotationsrichtung des rotierenden Körpers (4) geht.

3. Kippsegment-Radiallagervorrichtung nach mindestens einem der Ansprüche 1 bis 2,
wobei das Lagersegment (2), das die Nut (8) aufweist, eine Passnut (24), die in einer Axialrichtung auf der Außenumfangsfläche (7) des Lagersegments (2) bereitgestellt ist, und einen Drehzapfen einschließt, der das Lagersegment trägt; und
der Drehzapfen (3) in die Passnut (24) in einem solchen entfernbaren Zustand eingepasst ist, dass er eine Brücke zum Teil über die Nut bildet.

## Revendications

1. Dispositif de palier radial à patins oscillants qui supporte un corps rotatif (4), le dispositif comprenant :
un carter (1) ; et
une pluralité de patins de palier (2) prévus sur un côté circonférentiel intérieur du carter (1) ;
dans lequel l'un au moins des patins de palier (2), qui est prévu sur un côté de la moitié inférieure d'un palier, inclut une rainure (8) ménagée au niveau d'une section axialement centrale d'une surface circonférentielle extérieure (7) du patin de palier (2), la rainure (8) s'étendant circonférentiellement en traversant depuis une face terminale du patin jusqu'à sa face terminale opposée,
**caractérisé en ce qu'**une section axialement centrale d'une surface de coulissement (12) du patin de palier (2) est capable de se défléchir vers le bas.

2. Dispositif de palier radial à patins oscillants selon la revendication 1, dans lequel la rainure (8) inclut une pente (9) qui augmente progressivement la hauteur de la rainure alors que la rainure se rapproche d'une face terminale amont (5) dans une direction de rotation du corps rotatif (4).

3. Dispositif de palier radial à patins oscillants selon l'une au moins des revendications 1 et 2,
dans lequel le patin de palier (2) ayant la rainure (8) inclut une rainure de montage (24) prévue dans une direction axiale sur la surface circonférentielle extérieure (7) du patin de palier (2), et un pivot qui supporte le patin de palier ; et
le pivot (3) est monté dans la rainure de montage (24) dans une situation amovible de manière à former un pontet partiellement au-dessus de la rainure.
